# FASCICULE DE BREVET EUROPEEN

(11) **EP 2 459 493 B1**
(45) Date de publication et mention de la délivrance du brevet: **19.12.2018**
(21) Numéro de dépôt: 10745405.0
(22) Date de dépôt: 27.07.2010
(51) Int. Cl.: C03B 5/237

(54) **REGENERATEUR DE FOUR VERRIER**
REGENERATOR FÜR EINEN GLASSCHMELZOFEN
GLASSMAKING FURNACE REGENERATOR

(30) Priorité: 28.07.2009 FR 0955271
(43) Date de publication de la demande: 06.06.2012
(73) Titulaire: Saint-Gobain Centre de Recherches et d'Etudes Européen, 92400 Courbevoie (FR)
(72) Inventeur: BOUSSANT ROUX, Yves Marcel Léon, F-84140 Montfavet (FR); CITTI, Olivier, Wellesley MA 02482 (US); LECHEVALIER, David, Cambridge MA 02139 (US)
(74) Mandataire: Nony
(86) Numéro de dépôt international: PCT/IB2010/053414
(87) Numéro de publication internationale: WO 2011/013069

(56) Documents cités:
- EP-A- 1 205 446
- US-A- 1 361 709
- "SINTERED AND ELECTROFUSED PRODUCTS FOR THE GLASS INDUSTRY" 2007, SAINT GOBAIN SEFPRO , LE PONTET CEDEX, FRANCE , XP002568717 "General Recommendations for Soda-Lime Glass Furnaces" 1 page; "Type 4 Corrugated Cruciforms" 1 page; "Cruciform Assembly Instructions" pages 10-12

## Description

### Domaine technique

L'invention concerne un régénérateur de four verrier et un four comportant un tel régénérateur.

### Arrière-plan technologique

La plupart des fours de verrerie dits « à flammes », c'est-à-dire ayant comme source d'énergie des brûleurs à gaz ou à fuel, sont équipés de régénérateurs. Ces régénérateurs sont une succession de chambres garnies d'éléments céramiques formant un empilage et permettant de récupérer et de restituer la chaleur selon les cycles. Les gaz chauds ou fumées qui proviennent du four en fonctionnement entrent dans l'empilage en général par la partie haute du régénérateur et libèrent leur énergie calorifique dans l'empilage. Pendant ce temps, de l'air "froid", généralement à température ambiante, est amené en bas d'un autre empilage chauffé au cours du cycle précédent pour récupérer l'énergie calorifique ; cet air sort chaud en haut de l'empilage d'où il est conduit jusqu'aux brûleurs du four pour assurer la combustion du carburant dans les meilleures conditions.

EP0354844 ou WO03046455 décrivent des éléments céramiques destinés à former un empilage. EP 1 205 446 A et "Sintered and Electrofused Products for the Glass Industry",2007, Saint Gobain SEFPRO
divulguent des régénérateur de four de verrerie.

Aujourd'hui, dans de nombreux pays, les réglementations environnementales et le souci de maîtriser les dépenses incitent les verriers à rechercher toujours plus d'économies d'énergie.

Ainsi, les verriers sont-ils amenés à étudier de nouveaux moyens pour réduire la consommation d'énergie des fours de fusion du verre.

Il existe donc un besoin pour un dispositif de réduction de l'énergie consommée dans les fours de verrerie.

Un but de l'invention est de satisfaire, au moins partiellement, ce besoin.

### Résumé de l'invention

On atteint ce but au moyen d'un régénérateur de four de verrerie comprenant un empilage, entre une première face et une deuxième face, de plusieurs rangs d'éléments réfractaires, les éléments réfractaires de chaque rang définissant une pluralité de canaux.

Selon l'invention, une région de l'empilage s'étendant depuis la première face, sur une hauteur inférieure à 50% de la hauteur totale de l'empilage, dite "première région", comporte au moins une tranche transversale, dite "tranche à canaux étroits", dans laquelle au moins 75%, de préférence au moins 80%, de préférence au moins 90% des canaux, de préférence tous les canaux présentent, dans un plan de coupe transversal quelconque, une ouverture d'une largeur inférieure à une largeur maximale de 0,16 m (ces canaux étant qualifiés de « canaux étroits »), la hauteur cumulée de l'ensemble desdites tranches à canaux étroits dans la première région étant supérieure à 0,5 m, de préférence supérieure à 0,7 m, de préférence encore supérieure à 0,8 m, de préférence encore supérieure à 1,0 m, supérieure à 1,2 m, de préférence encore supérieure à 1,5 m.

Une "tranche transversale" est une partie de l'empilage délimitée par deux plans transversaux, c'est-à-dire perpendiculaires à l'axe d'empilement. Un rang est donc une tranche transversale dont la hauteur est celle des éléments réfractaires qui le constituent.

Dans une tranche à canaux étroits, les canaux étroits présentent toujours, quel que soit le plan de coupe transversal considéré, une ouverture d'une largeur inférieure à la largeur maximale. Dans une tranche à canaux étroits, un canal étroit peut donc avoir une section transversale dont les dimensions varient le long du canal, pourvu que la largeur de cette section reste toujours inférieure à la largeur maximale.

La "hauteur cumulée" est la somme des hauteurs de toutes les tranches à canaux étroits dans la première région de l'empilage.

Les inventeurs ont constaté qu'un régénérateur selon l'invention présente, à hauteur d'empilage identique et/ou à masse d'empilage identique, une efficacité supérieure. En particulier, lorsqu'il est utilisé pour réchauffer des gaz à destination d'un brûleur, il permet d'augmenter la température des gaz en sortie d'empilage. La consommation du four de verrerie en est avantageusement réduite.

Un régénérateur selon l'invention peut encore comporter une, voire plusieurs, des caractéristiques optionnelles suivantes :
- La première face est la face supérieure de l'empilage;
- L'empilage comporte au moins une tranche à canaux étroits s'étendant à partir de la première face;
- Ladite largeur maximale est de 0,13 m, 0,11 m, 0,1 m, voire de 0,09 m ou de 0,08 m;
- Le diamètre hydraulique des ouvertures des canaux étroits dans ladite tranche à canaux étroits est inférieur à 0,115 m, de préférence inférieur à 0,110 m, quel que soit le plan de coupe transversal considéré; Par « diamètre hydraulique » d'une ouverture d'un canal dans un plan de coupe transversal, on entend le rapport entre quatre fois la surface de cette ouverture et le périmètre de cette ouverture;
- La largeur des ouvertures des canaux étroits d'une tranche à canaux étroits est toujours supérieure à 0,03 m, voire supérieure à 0,04 m;
- Au moins dans la région de l'empilage non comprise dans la première région, dite « deuxième région », voire sur toute la hauteur de l'empilage, la largeur de l'ouverture de l'un quelconque des canaux d'une ou plusieurs tranches ne constituant pas une tranche à canaux étroits, dite(s) « tranche(s) à canaux larges », voire de toutes les tranches à canaux larges est, quel que soit le plan de coupe transversal considéré,
   - supérieure de plus de 20%, de préférence de plus de 30% à la largeur de l'ouverture de l'un quelconque des canaux étroits dans l'une quelconque desdites tranches à canaux étroits de la première région et/ou
   - supérieure à 0,180 m, de préférence supérieure à 0,200 m;
- La deuxième région ne comporte pas de tranche à canaux étroits;
- L'empilage comporte une unique tranche à canaux étroits, définissant la face supérieure de l'empilage, sous laquelle chaque canal présente, quel que soit le plan de coupe transversal considéré (jusqu'à la face inférieure de l'empilage), une ouverture dont la largeur est
   - supérieure de plus de 20%, de préférence supérieure de plus de 30% à la largeur de l'ouverture de l'un quelconque des canaux étroits dans ladite tranche à canaux étroits, et/ou
   - supérieure à 0,180 m, de préférence supérieure à 0,200 m;
- Au moins une partie, voire une partie seulement, des éléments d'une ou plusieurs tranches à canaux larges, voire de toutes les tranches à canaux larges, présentent des ailes dont les faces latérales sont pourvues d'obstacles, de préférence faisant saillie de plus de 5 mm et/ou de moins de 20 mm; Ces éléments sont appelés « éléments corrugués » ;
- L'empilage ne comporte pas d'éléments corrugués en contact avec la première face, ni en contact avec la deuxième face de l'empilage; De préférence, au moins un rang d'éléments ne définissant ni la première face, ni la deuxième face, de préférence à canaux larges, est constitué d'éléments corrugués; De préférence, ce rang n'appartient pas à la première région; La présence d'éléments corrugués dans une région « intermédiaire » de l'empilage, c'est-à-dire ne définissant aucune des première et deuxième faces, est particulièrement avantageuse lorsque l'empilage ne comporte qu'une unique tranche à canaux étroits définissant la face supérieure de l'empilage;
- De préférence, la ou les tranches à canaux étroits de la première région ne comportent pas d'éléments corrugués;
- De préférence, chaque canal du rang définissant la deuxième face de l'empilage présente une ouverture dont la largeur est supérieure à 0,3 m, au moins dans un plan de coupe transversal au niveau de la deuxième face, de préférence quel que soit le plan de coupe transversal considéré;
- Au moins une tranche à canaux étroits de la première région présente une hauteur supérieure à 0,5 m, de préférence supérieure à 0,7 m, de préférence encore supérieure à 0,8 m; Cette tranche peut en particulier s'étendre à partir de la première face;
- La première région s'étend sur une hauteur inférieure à 40%, inférieure à 30% et/ou supérieure à 5%, supérieure à 10%, voire supérieure à 15% ou supérieure à 20% de la hauteur de l'empilage; La première région peut par exemple s'étendre sur une hauteur inférieure à 5 m, inférieure à 4 m, inférieure à 3 m, inférieure à 2 m, inférieure à 1,5 m, voire inférieure à 1,0 m;
- La première région ne comporte qu'une unique tranche à canaux étroits;
- La première région comporte moins de 10 rangs, voire moins de 8 rangs;
- La première région comporte au moins deux, de préférence au moins quatre rangs, dont au moins 75%, de préférence au moins 80%, de préférence au moins 90% des canaux, de préférence tous les canaux présentent une ouverture d'une largeur, mesurée dans un plan de coupe transversal quelconque, toujours inférieure à la largeur maximale; Ces rangs sont qualifiés de rangs "à canaux étroits"; Lesdits rangs à canaux étroits peuvent être adjacents les uns aux autres, ou non;
- Un desdits rangs à canaux étroits s'étend à l'extrémité de l'empilage de manière à définir la première face de l'empilage;
- Au moins un, de préférence chacun des rangs à canaux étroits de la première région présente une hauteur supérieure à 0,10 m, supérieure à 0,14 m, supérieure à 0,2 m, supérieure à 0,3 m, voire supérieure à 0,35 m et/ou inférieure à 0,6 m, inférieure à 0,5 m, voire inférieure à 0,45 m;
- Lesdits deux rangs à canaux étroits sont choisis parmi les six, parmi les cinq, parmi les quatre, ou parmi les trois premiers rangs s'étendant à partir de la première face; Lesdits deux rangs à canaux étroits constituent de préférence les deux premiers rangs s'étendant à partir de la première face;
- Lesdits quatre rangs à canaux étroits sont choisis parmi les six ou parmi les cinq rangs s'étendant à partir de la première face; Lesdits quatre rangs à canaux étroits constituent de préférence les quatre premiers rangs s'étendant à partir de la première face;
- Au moins une partie, voire la totalité des éléments desdits rangs à canaux étroits présentent des ailes dont les faces latérales sont pourvues d'obstacles;
- L'empilage comporte, voire est constitué par des éléments cruciformes et/ou double cruciformes;
- L'empilage comporte, voire est constitué par des éléments en un matériau réfractaire électrofondu;
- L'axe d'empilement est vertical;
- Le nombre de rangs de l'empilage est supérieur à 10 et/ou inférieur à 30;
- La hauteur de l'empilage est supérieure à 2 m, voire supérieure à 5 m et/ou inférieure à 15 m, voire inférieure à 12 m;
- Quel que soit le plan de coupe transversale considéré, l'ouverture d'un canal étroit quelconque est constante ;
- Quel que soit le plan de coupe transversale considéré, l'ouverture d'un canal étroit quelconque est polygonale, de préférence rectangulaire, de préférence encore carrée.

L'invention concerne aussi un four de verrerie comprenant un régénérateur selon l'invention.

De préférence, la première face est la face de l'empilage par laquelle de l'air réchauffé et à destination d'un brûleur sort de l'empilage et/ou par laquelle des gaz chaud provenant d'un brûleur entrent dans l'empilage. De préférence, la première face est la face supérieure de l'empilage.

On décrit enfin un procédé de commande d'un four de verrerie comprenant un régénérateur selon l'invention, procédé selon lequel, lors d'un premier cycle, des gaz chaud provenant d'un brûleur dudit four sont introduits dans l'empilage dudit régénérateur par la première face dudit empilage, puis, dans un deuxième cycle consécutif audit premier cycle, de l'air réchauffé à travers ledit empilage sort par la première face dudit empilage avant d'être envoyé vers un brûleur dudit four.

### Brève description des figures

La description qui va suivre ainsi que les différentes figures permettront de mieux comprendre l'invention.

Sur ces figures :
- la figure 1 représente une section, selon le plan de coupe transversal A, de l'empilage selon l'invention représenté sur les figures 2a et 2b ;
- les figures 2a et 2b représentent, vus de côté, des empilages de régénérateurs selon l'invention ;
- les figures 3a et 3b et les figures 4a, 4b et 4c représentent, en perspective, des exemples d'éléments pouvant être utilisés pour construire un empilage d'un régénérateur selon l'invention ;
- la figure 5 représente différentes ouvertures de canaux, dans un plan de coupe transversal ;
- la figure 6 représente un exemple d'agencement d'éléments cruciformes dans un rang d'un régénérateur.

Dans les différentes figures, des références identiques sont utilisées pour désigner des organes identiques ou analogues.

### Description détaillée

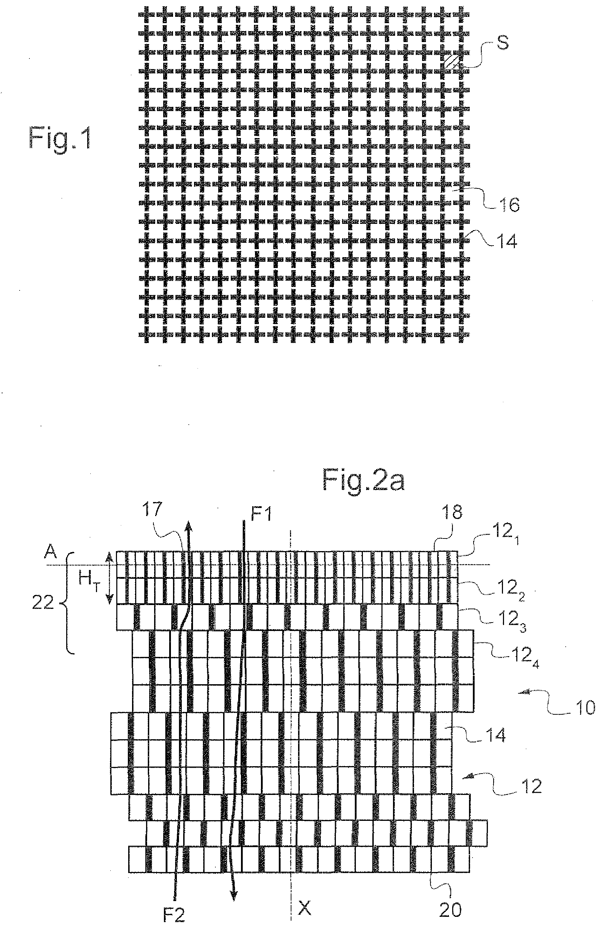

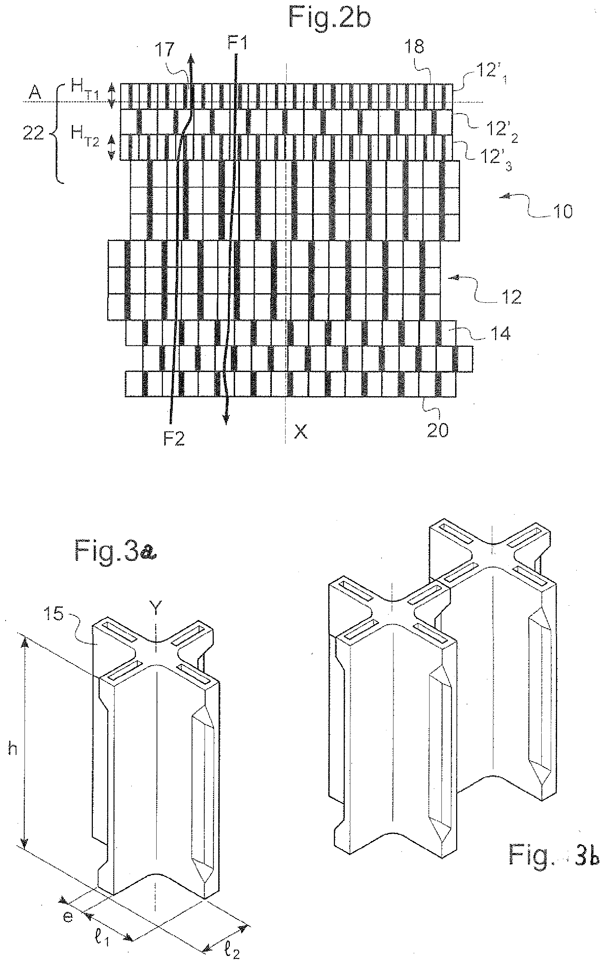

Les figures 2a et 2b représentent chacune un empilage 10, d'axe d'empilement X vertical, d'un régénérateur. L'empilage 10 est une superposition de rangs 12, chaque rang, ou « étage », étant constitué d'un ensemble d'éléments 14, classiquement en un matériau réfractaire et présentant tous sensiblement la même hauteur.

Un élément 14 peut classiquement présenter la forme d'un bloc cruciforme, comme celui représenté sur la figure 3a. Ce bloc, d'une hauteur « h » comporte quatre ailes 15 s'étendant radialement à partir de l'axe Y de l'élément. La longueur « l₁ » et l'épaisseur « e » sont identiques quelle que soit l'aile considérée.

Les blocs cruciformes peuvent également présenter deux ailes opposées d'une longueur "l₂" plus faible que celle des deux autres ailes.

Un élément peut aussi, par exemple, présenter la forme d'un bloc cruciforme double, comme celui représenté sur la figure 3b. Un tel élément peut résulter de la réunion de deux éléments cruciformes simples par l'extrémité de l'une de leurs ailes. L'utilisation de blocs cruciforme double accroît la stabilité de l'empilage.

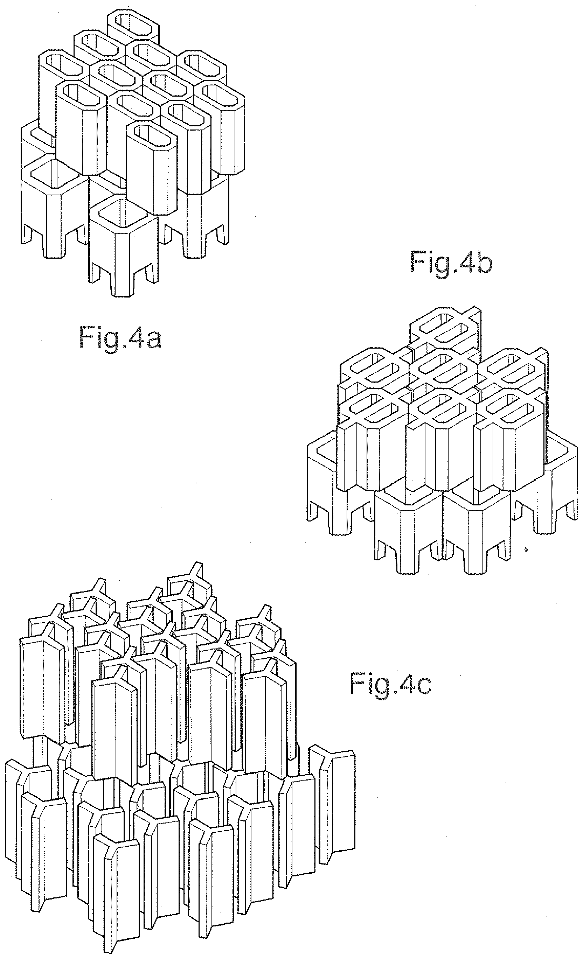

D'autres formes peuvent également être envisagées, comme illustré par les figures 4a, 4b et 4c. Sur ces figures, les éléments du rang supérieur représenté peuvent être notamment utilisés pour construire une tranche à canaux étroits. En outre, les éléments du rang inférieur représenté peuvent être notamment utilisés pour construire une tranche à canaux larges.

Toutes les formes d'éléments réfractaires frittés ou fondus utilisés classiquement peuvent être envisagées, en particulier les éléments électrofondus cruciformes « Type 3 », « Type 4, « Type 6 », fabriqués et commercialisés par Saint-Gobain SEFPRO pour le garnissage des chambres des régénérateurs. En effet, ces produits conviennent parfaitement bien pour cette application puisqu'ils présentent une très faible réactivité vis-à-vis des vapeurs alcalines contenues dans les fumées et résistent très bien aux hautes températures et aux cycles thermiques imposés par le fonctionnement des régénérateurs. Par ailleurs, la surface spécifique de ces éléments est élevée, ce qui favorise les échanges thermiques et permet d'atteindre de très bons rendements de régénération. D'autre part, le matériau réfractaire électrofondu constituant ces éléments cruciformes est particulièrement bien adapté pour supporter les opérations de nettoyage des empilages par traitement thermique et/ou pour la réalisation de formes complexes, y compris avec des épaisseurs d'élément relativement faibles.

Les dimensions des éléments utilisés sont déterminées en fonction de la région de l'empilage considérée.

Les éléments d'un rang sont agencés de manière à définir un ensemble de canaux 16.

L'ouverture S des canaux 16 dans un plan de coupe transversal, ou "section transversale", peut être constante ou variable sur la hauteur d'un rang.

Dans les modes de réalisation des figures 2a et 2b, tous les canaux du rang 12₁ présentent, dans un plan de coupe transversal, des ouvertures S identiques, sensiblement carrées.

Selon l'invention, dans au moins une tranche à canaux étroits de la première région, la largeur de ces ouvertures est toujours inférieure à une largeur maximale de 0,16 m.

Dans un plan de coupe transversal, la longueur « L » d'une ouverture est sa plus grande dimension. Sa largeur « l » est la plus grande dimension mesurée perpendiculairement à la direction de la longueur.

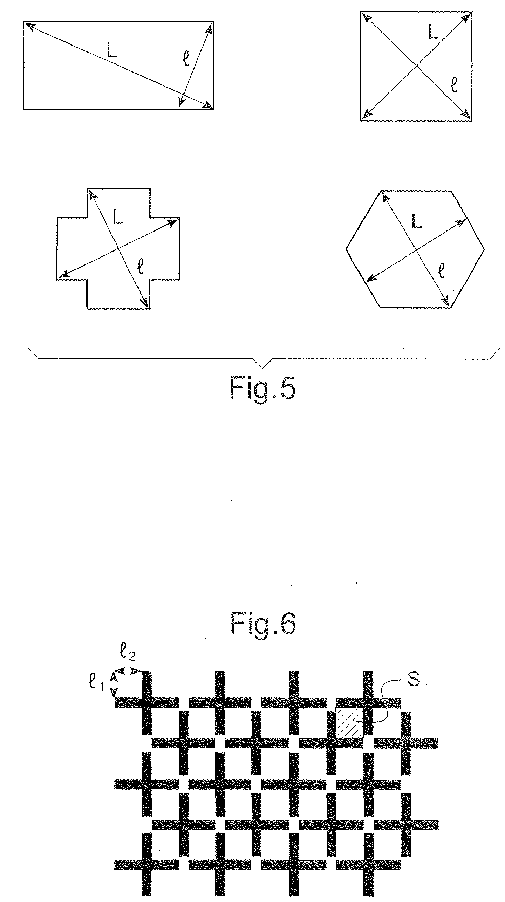

Sur la figure 5, ces dimensions ont été représentées pour différents exemples d'ouvertures.

Les éléments superposés de deux rangs adjacents (c'est-à-dire en contact) peuvent être identiques ou différents, alignés ou décalés horizontalement. Deux rangs superposés, présentant des configurations identiques, peuvent par exemple être décalés horizontalement, dans le sens de la largeur et de la longueur du rang, d'une demi longueur d'élément, comme les rangs 12₃ et 12₄ sur la figure 2a.

Dans tous les cas, l'agencement et la conformation des éléments 14 et des rangs 12 sont cependant déterminés pour conduire à la formation de « passages » 17 autorisant la circulation de gaz entre des faces supérieure 18 et inférieure 20 de l'empilage 10.

Comme expliqué en préambule, des gaz chauds peuvent entrer dans l'empilage par exemple par la face supérieure 18 et ressortir refroidis par la face inférieure 20 (flèche F1). Lors du cycle suivant, de l'air "froid" pourra entrer par la face inférieure 20 et ressortir par la face supérieure 18 après avoir récupéré une partie de l'énergie calorifique stockée dans les éléments lors du cycle précédent (flèche F2).

Dans ce mode de réalisation, la région du régénérateur constituée des premiers rangs s'étendant à partir de la face supérieure 18 est appelée "première région" 22.

Sur la figure 2a, les rangs 12₁ et 12₂ sont des rangs à canaux étroits. Ils définissent chacun, dans la première région 22, des canaux qui présentent tous, dans n'importe quel plan de coupe transversal, une ouverture S dont la largeur est inférieure à la largeur maximale. Le rang 12₁ définit la face supérieure 18 de l'empilage. Les rangs 12₁ et 12₂ sont adjacents et définissent ensemble une tranche à canaux étroits. La première région ne comporte qu'une seule tranche à canaux étroits. Selon l'invention, la hauteur H_{T} de cette tranche est supérieure à 0,5 m.

Sur la figure 2b, les rangs 12'₁ et 12'₃ de la première région 22 sont des rangs à canaux étroits. Les rangs 12'₁ et 12'₃ constituent donc chacun une tranche à canaux étroits d'une hauteur H_{T1} et H_{T3}, respectivement. Selon l'invention, la hauteur cumulée H_{T} (= H_{T1} + H_{T3}) de ces deux tranches est supérieure à 0,5 m. Les rangs 12'₁ et 12'₃ sont séparés par le rang 12'₂ dont les canaux présentent, dans au moins un plan de coupe transversal, une ouverture dont la largeur est supérieure à 0,5 m.

### Exemples

Les exemples suivants sont fournis à des fins illustratives et non limitatives.

Différents blocs cruciformes 1 à 4 du type de celui représenté sur la figure 3 ont été fabriqués et utilisés pour construire des empilages. Chaque rang de ces empilages ne comportait qu'un seul type de bloc, les blocs d'un rang étant disposés avec un décalage d'une demi longueur d'élément d'une ligne à l'autre et d'une colonne à l'autre, comme représenté sur la figure 6. Les ouvertures rectangulaires des canaux ainsi définis étaient constantes quel que soit le plan de coupe transversal considéré.

Les dimensions des blocs et des ouvertures des canaux définis par ces blocs dans un rang sont fournies dans le tableau 1 suivant.

Pour les blocs 2 et 4, les faces latérales des différentes ailes étaient pourvues d'obstacles ou « corrugations » (non représentées) de 10 mm.

**Tableau 1**

| | l₁ (mm) | l₂ (mm) | E (mm) | H (mm) | Ouverture (S) d'un canal (mm x mm) | corrugations |
|---|---|---|---|---|---|---|
| Bloc 1 | 130 | 130 | 30 | 420 | 150 x 150 | non |
| Bloc 2 | 130 | 130 | 30 | 420 | 150 x 150 HC | oui |
| Bloc 3 | 310 | 310 | 30 | 175 | 330 x 330 | non |
| Bloc 4 | 55 | 130 | 30 | 420 | 60 x 150 HC | oui |

| | | | | | | |
|---|---|---|---|---|---|---|
| HC : Hors Corrugations | | | | | | |

Le tableau 2 indique la configuration de différents empilages testés. Plus précisément, il indique la nature des blocs constituant les rangs successifs depuis la face supérieure. Par exemple, l'empilage de l'exemple 2 comporte successivement, depuis la face supérieure, 4 rangs formés de blocs 4, puis 12 rangs formés de blocs 2, puis 11 rangs formés de blocs 1. « * » indique les exemples de référence.

Les exemples 1* et 6* correspondent à des empilages classiques utilisant des pièces cruciformes TYPE 3 et TYPE 4 produites et commercialisées par Saint-Gobain SEFPRO.

De l'air à température ambiante a été introduit par la face inférieure et la température en sortie de l'empilage, c'est-à-dire au niveau de la face supérieure, a été évaluée. « TSA » indique la température de sortie de l'air en °C.

Deux séries de tests ont été effectuées, avec différentes hauteurs d'empilage. Dans chacune de ces séries, les masses des empilages ont été comparées à celle de l'exemple de référence correspondant (exemple 1* pour les empilages d'environ 11 mètres de hauteur et exemple 6* pour les empilages d'environ 7 mètres de hauteur). ΔM fournit la différence de masse, en pourcentage par rapport à la masse de l'exemple de référence correspondant.

**Tableau 2**

| Exemple | 1* | 2 | 3 | 4 | 5 | 6* | 7 | 8* | 9 |
|---|---|---|---|---|---|---|---|---|---|
| Nb rangs de blocs 4 | / | 4 | 7 | 4 | 4 | / | 4 | / | 5 |
| Nb rangs de blocs 2 | 16 | 12 | 9 | 12 | 12 | 13 | 9 | 13 | 8 |
| Nb rangs de blocs 1 | 11 | 11 | 11 | 6 | 2 | 4 | 4 | / | / |
| Nb rangs de blocs 3 | / | / | / | 12 | 21 | / | / | 10 | 10 |
| TSA | 1356 | 1394 | 1411 | 1386 | 1376 | 1202 | 1261 | 1180 | 1257 |
| Nb total de rangs | 27 | 27 | 27 | 32 | 39 | 17 | 17 | 23 | 23 |
| Hauteur totale (m) | 11, 34 | 11, 34 | 11, 34 | 11,34 | 11,24 | 7,14 | 7,14 | 7,21 | 7,21 |
| ΔM | / | 7,8% | 13,7% | 1,0% | -5,6% | / | 13,5% | -18,3% | -3,2% |

La comparaison des exemples 2 à 5 avec l'exemple 1* ou des exemples 7 et 9 avec l'exemple 6* ou l'exemple 8* montre qu'une réduction de l'ouverture des canaux en partie supérieure d'empilage avec plusieurs rangs de blocs 4 permet d'augmenter sensiblement la température de sortie de l'air et ainsi l'efficacité de l'empilage. Les inventeurs considèrent que cette augmentation de température correspond à une économie d'énergie comprise entre 1,3 et 3,1%.

Les exemples 4, 5 ou 9 montrent que cette économie d'énergie peut se faire à masse d'empilage constante, voire en réduisant la masse de l'empilage.

La comparaison des exemples 8* et 7 montre qu'il ne suffit pas que l'ouverture des canaux diminue au cours du trajet de l'air pour obtenir l'effet technique souhaité. Il est nécessaire de disposer au moins deux rangs pour lesquels l'ouverture présente une largeur inférieure à 0,16 m, la hauteur cumulée de ces rangs étant supérieure à 0,5 m.

Bien entendu, la présente invention n'est pas limitée aux modes de réalisation décrits et fournis à titre d'exemples. En particulier, des combinaisons des différents modes de réalisation décrits ou représentés entrent également dans le cadre de l'invention.

## Revendications

1. Régénérateur de four de verrerie comprenant un empilage (10), entre une première face (18) et une deuxième face (20), de plusieurs rangs (12) d'éléments (14) réfractaires, les éléments réfractaires de chaque rang définissant une pluralité de canaux (16),
régénérateur dans lequel une région de l'empilage s'étendant depuis la première face sur une hauteur inférieure à 50% de la hauteur totale de l'empilage, dite "première région" (22), comporte au moins une tranche transversale (12₁,12₂; 12'₁,12'₃), dite "tranche à canaux étroits", dans laquelle au moins 75% des canaux présentent, dans un plan de coupe transversal quelconque, une ouverture d'une largeur (I) inférieure à une largeur maximale de 0,16 m, ces canaux étant qualifiés de « canaux étroits », la hauteur cumulée (H_{T}) de l'ensemble desdites tranches à canaux étroits dans la première région étant supérieure à 0,5 m, la largeur d'une ouverture étant sa plus grande dimension mesurée perpendiculairement à la direction de la longueur.

2. Régénérateur selon la revendication précédente, dans lequel tous les canaux de ladite tranche à canaux étroits sont des canaux étroits.

3. Régénérateur selon l'une quelconque des revendications précédentes, dans lequel ladite hauteur cumulée est supérieure à 0,8 m.

4. Régénérateur selon la revendication précédente, dans lequel ladite hauteur cumulée est supérieure à 1,0 m.

5. Régénérateur selon l'une quelconque des revendications précédentes, dans lequel la première région (22) s'étend sur une hauteur inférieure à 2 m.

6. Régénérateur selon l'une quelconque des revendications précédentes, dans lequel la première région (22) comporte moins de 10 rangs parmi lesquels au moins deux rangs, dits "à canaux étroits", sont conformés de manière que, pour chacun desdits rangs, la largeur des ouvertures des canaux est toujours inférieure à ladite largeur maximale.

7. Régénérateur selon la revendication précédente, dans lequel la première région comporte au moins quatre rangs à canaux étroits.

8. Régénérateur selon l'une quelconque des deux revendications immédiatement précédentes, dans lequel lesdits rangs à canaux étroits sont choisis parmi les six premiers rangs s'étendant à partir de la première face.

9. Régénérateur selon l'une quelconque des trois revendications immédiatement précédentes, dans lequel les éléments de chacun des rangs à canaux étroits présentent une hauteur supérieure à 0,10 m et inférieure à 0,5 m.

10. Régénérateur selon l'une quelconque des revendications précédentes, dans lequel la largeur de ladite ouverture est supérieure à 0,03 m.

11. Régénérateur selon l'une quelconque des revendications précédentes, comportant, dans la première région, une unique tranche à canaux étroits, ladite unique tranche s'étendant à partir de la première face.

12. Régénérateur selon l'une quelconque des revendications précédentes, dans lequel la première face (18) est la face supérieure de l'empilage.

13. Régénérateur selon l'une quelconque des revendications précédentes, dans lequel l'empilage (10) comporte des éléments cruciformes et/ou des éléments double cruciformes.

14. Régénérateur selon l'une quelconque des revendications précédentes, dans lequel l'empilage (10) comporte des éléments en un matériau réfractaire électrofondu.

15. Four de verrerie comprenant un régénérateur selon l'une quelconque des revendications précédentes.

16. Four selon la revendication précédente, dans lequel la première face est la face de l'empilage par laquelle de l'air chaud sort de l'empilage à destination d'un brûleur et/ou par laquelle des gaz chaud provenant d'un brûleur entrent dans ledit empilage.

## Patentansprüche

1. Ein Regenerator für einen Glasofen umfassend, zwischen einer ersten Seite (18) und einer zweiten Seite (20), einen Stapel (10) aus mehreren Reihen (12) hitzebeständiger Elemente (14), wobei die hitzebeständigen Elemente jeder Reihe durch eine Vielzahl von Kanälen (16) gekennzeichnet sind,
der Regenerator weist, in dem Bereich des Stapels, der sich von der ersten Fläche bis zu einer Höhe von weniger als 50% der Gesamthöhe des Stapels erstreckt, der als "erster Bereich" (22) bezeichnet wird, mindestens eine transversale Scheibe (12₁, 12₂; 12'₁, 12'₃) auf, die als "Engkanalscheibe" bezeichnet wird, bei der mindestens 75% der Kanäle in einer beliebigen Querschnittsebene eine Öffnung mit einer Breite (1) von weniger als einer maximalen Breite von 0,16 m aufweisen, wobei diese Kanäle als "enge Kanäle" bezeichnet werden, wobei die kumulative Höhe (Hτ) all dieser Engkanalscheiben in dem ersten Bereich größer als 0,5 m ist,
die Breite der Öffnung entspricht der größten Abmessung, die senkrecht zur Richtung der Breite gemessen wird.

2. Der Regenerator nach dem vorhergehenden Anspruch, bei dem alle Kanäle der Engkanalscheibe enge Kanäle sind.

3. Der Regenerator nach einem der vorhergehenden Ansprüche, bei dem die kumulative Höhe größer als 0,8 m ist.

4. Der Regenerator nach dem vorhergehenden Anspruch, bei dem die kumulative Höhe größer als 1,0 m ist.

5. Der Regenerator nach einem der vorhergehenden Ansprüche, bei dem sich der erste Bereich (22) über eine Höhe von weniger als 2 m erstreckt.

6. Der Regenerator nach einem der vorhergehenden Ansprüche, bei dem der erste Bereich (22) weniger als 10 Reihen umfasst, von denen mindestens zwei Reihen, die als "Engkanal-" bezeichnet werden, so geformt sind, dass die Breite der Kanalöffnungen für jede dieser Reihen immer kleiner als die maximale Breite ist.

7. Der Regenerator nach dem vorhergehenden Anspruch, bei dem der erste Bereich mindestens vier Engkanalreihen umfasst.

8. Der Regenerator nach einem der beiden unmittelbar vorhergehenden Ansprüche, bei dem die Engkanalreihen aus den ersten sechs Reihen ausgewählt sind, die sich ausgehend von der ersten Fläche erstrecken.

9. Der Regenerator nach einem der drei unmittelbar vorhergehenden Ansprüche, bei dem die Elemente jeder der Engkanalreihen eine Höhe von mehr als 0,10 m und weniger als 0,5 m aufweisen.

10. Der Regenerator nach einem der vorhergehenden Ansprüche, bei dem die Breite der Öffnung größer als 0,03 m ist.

11. Der Regenerator nach einem der vorhergehenden Ansprüche, der im ersten Bereich eine einzelne Engkanalscheibe aufweist, wobei sich diese einzelne Engkanalscheibe ausgehend von der ersten Fläche erstreckt.

12. Der Regenerator nach einem der vorhergehenden Ansprüche, wobei die erste Fläche (18) die obere Fläche des Stapels ist.

13. Der Regenerator nach einem der vorhergehenden Ansprüche, bei dem der Stapel (10) kreuzförmige Elemente und/oder doppelte kreuzförmige Elemente umfasst.

14. Der Regenerator nach einem der vorhergehenden Ansprüche, bei dem der Stapel (10) Elemente aus hitzebeständigem elektrisch gegossenem Material umfasst.

15. Ein Glasofen, umfassend einen Regenerator nach einem der vorhergehenden Ansprüche.

16. Der Ofen nach dem vorhergehenden Anspruch, bei dem die erste Seite die Seite des Stapels ist, durch die heiße Luft den Stapel in Richtung eines Brenners verlässt und/oder durch die heiße Gase, die aus einem Brenner entstammen, in den Stapel eintreten.

## Claims

1. A regenerator for a glassmaking furnace comprising a stack (10) of a plurality of rows (12) of refractory elements (14), between a first face (18) and a second face (20), the refractory elements of each row defining a plurality of channels (16),
regenerator in which a region of the stack extending from the first face over a height of less than 50% of the total height of the stack, referred to as a "first region" (22), includes at least one transverse slab (12₁,12₂; 12'₁,12'₃), referred to as a "narrow-channel slab", in which at least 75% of the channels present an opening, in any cross-section plane, that is of a width (1) less than a maximum width of 0.16 m, these channels being called "narrow channels", the accumulated height (H_{T}) of all of said narrow-channel slabs in the first region being greater than 0.5 m, the width of an opening being its greater dimension measured perpendicularly to the direction of the length.

2. A regenerator according to the preceding claim, wherein all the channels of said narrow-channel slab are narrow channels.

3. A regenerator according to any preceding claim, wherein said accumulated height is greater than 0.8 m.

4. A regenerator according to the preceding claim, wherein said accumulated height is greater than 1.0 m.

5. A regenerator according to any preceding claim, wherein the first region (22) extends over a height of less than 2 m.

6. A regenerator according to any preceding claim, wherein the first region (22) includes fewer than 10 rows, of which at least two rows, referred to as "narrow-channel" rows, are shaped in such a manner that, for each of said rows, the width of the openings of the channels is always less than said maximum width.

7. A regenerator according to the preceding claim, wherein the first region includes at least four narrow-channel rows.

8. A regenerator according to either one of the two immediately preceding claims, wherein said narrow-channel rows are selected from amongst the first six rows extending from the first face.

9. A regenerator according to any one of the three immediately preceding claims, wherein the elements of each of the narrow-channel rows present a height that is greater than 0.10 m and less than 0.5 m.

10. A regenerator according to any preceding claim, wherein the width of said opening is greater than 0.03 m.

11. A regenerator according to any preceding claim, including, in the first region, a single narrow-channel slab, said single slab extending from the first face.

12. A regenerator according to any preceding claim, wherein the first face (18) is the top face of the stack.

13. A regenerator according to any preceding claim, wherein the stack (10) includes cruciform elements and/or double cruciform elements.

14. A regenerator according to any preceding claim, wherein the stack (10) includes elements made of an electro-fused refractory material.

15. A glass-making furnace including a regenerator according to any preceding claim.

16. A furnace according to the preceding claim, wherein the first face is the face of the stack through which hot air leaves the stack going towards a burner and/or through which hot gas coming from a burner enters into said stack.
